# EUROPÄISCHE PATENTSCHRIFT

(11) **EP 0 846 867 B1**
(45) Veröffentlichungstag und Bekanntmachung des Hinweises auf die Patenterteilung: **05.02.2003**
(21) Anmeldenummer: 97119861.9
(22) Anmeldetag: 13.11.1997
(51) Int. Cl.: F04D 21/00, F04D 29/68, F04D 29/32, F04D 29/54, F01D 5/14

(54) **Turbomaschine mit transsonischer Verdichterstufe**
Turbomachine with a transsonic compression stage
Turbomachine avec un étage de compression transsonique

(30) Priorität: 06.12.1996 DE 19650656
(43) Veröffentlichungstag der Anmeldung: 10.06.1998
(73) Patentinhaber: MTU Aero Engines GmbH, 80995 München (DE)
(72) Erfinder: Hoeger, Martin, Dr., 85435 Erding (DE); Schmidt-Eisenlohr, Uwe, 81247 München (DE)
(74) Vertreter: Einsele, Rolf W.

(56) Entgegenhaltungen:
- EP-A- 0 675 290
- BE-A- 677 969
- CH-A- 329 147
- GB-A- 2 079 399
- US-A- 5 397 215
- PATENT ABSTRACTS OF JAPAN vol. 7, no. 112 (M-215) [1257], 17. Mai 1983 & JP 58 032903 A (TOKIO SHIBAURA DENKI), 26. Februar 1983

## Beschreibung

Die Erfindung betrifft eine Turbomaschine mit einer im transsonischen Bereich arbeitenden Verdichterstufe, die einen aus einer Nabe und einer Anzahl von sich radial von der Nabe wegerstreckenden Verdichterschaufeln bestehenden Rotor und/oder einen aus einer Nabe und einem Gehäuse und einer Anzahl von sich radial zwischen Nabe und Gehäuse erstreckenden Verdichterschaufeln bestehenden Stator enthält. Insbesondere betrifft die Erfindung eine Gasturbine, insbesondere ein Turbostrahltriebwerk.

Bei einer Turbomaschine, die eine im transsonischen Bereich arbeitende Verdichterstufe enthält, besteht ein Problem darin, daß aufgrund der endlichen Dicke der Verdichterschaufeln im Bereich der Nabe und/oder des Gehäuses auf der Saugseite der Schaufeln eine zu große Mach-Zahl der Strömung entsteht, so daß auf der Saugseite der Schaufel die Gefahr einer Grenzschichtablösung auftritt.

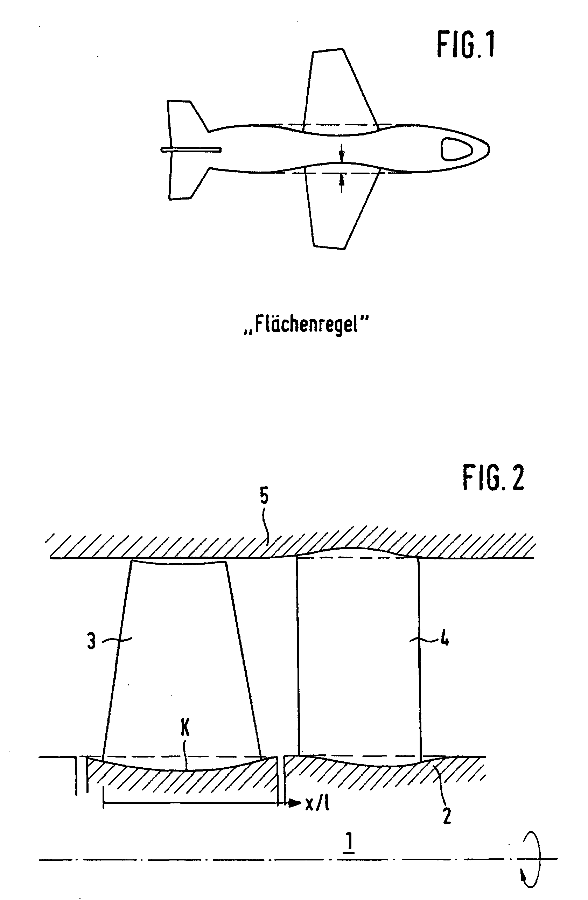

Im Bereich des Flugzeugbaus ist es aus der Zeit um 1940 bekannt, den Flugzeugrumpf im Bereich der Tragflächen in konkaver Weise leicht einzuschnüren, um für die aufgrund der endlichen Dicke der Tragflächen beschleunigte Strömung am Tragflächenansatz einen zusätzlichen Raum zur Verfügung zu stellen und damit das Auftreten von Übergeschwindigkeiten zu vermeiden. Dieser Zusammenhang ist als sogenannte Flächenregel bekannt und in Figur 1 dargestellt.

Würde man bei einem im transsonischen Bereich arbeitenden Verdichter am Fuß der Verdichterschaufeln an der Nabe oder am Gehäuse eine ähnliche Flächenerweiterung vornehmen, so entstünde im Bereich von Überschallfeldern eine Art Überschalldüse, die zu einer unerwünschten Zunahme der Mach-Zahl führen würde. Während nämlich bei Unterschall eine solche Flächenerweiterung zur Verbesserung der Strömungsverhältnisse führt, werden durch die Flächenerweiterung in den örtlichen Überschallfeldern auf der Saugseite der Schaufeln im Bereich der Nabe höhere Mach-Zahlen und damit höhere Stoßverluste hervorgerufen.

Die Aufgabe der Erfindung ist es, eine Turbomaschine mit einer verbesserten Verdichterstufe zu schaffen.

Diese Aufgabe wird durch eine Turbomaschine mit den im Anspruch 1 angegebenen Merkmalen gelöst.

Die erfindungsgemäße Turbomaschine weist eine im transsonischen Bereich arbeitende Verdichterstufe auf, die einen aus einer Nabe und einer Anzahl von sich radial von der Nabe wegerstreckenden Verdichterschaufeln bestehenden Rotor und/oder einen aus einer Nabe und einem Gehäuse und einer Anzahl von sich radial zwischen Nabe und Gehäuse erstreckenden Verdichterschaufeln bestehenden Stator enthält, wobei die Schaufeln eine Druckseite und eine Saugseite aufweisen. Gemäß der Erfindung ist es vorgesehen, daß die Nabe des Rotors und/oder die Nabe des Stators und/oder das Gehäuse des Stators an jeder Schaufel im Bereich der Druckseite eine konkave Kontur aufweist.

Ein wesentlicher Vorteil der erfindungsgemäßen Ausbildung der Verdichterstufe ist es, daß auf der Druckseite der Verdichterschaufeln durch die konkave Kontur die Strömungsgeschwindigkeit herabgesetzt wird, während auf der Saugseite der Schaufeln und in der Anströmung eine unerwünschte Zunahme der Mach-Zahl und damit das Auftreten von höheren Stoßverlusten vermieden und die Gefahr einer Grenzschichtablösung auf der Saugseite vermindert wird.

Infolge der Neigung der Nabenkontur gegenüber der Verdichterschaufel treten zusätzliche radiale Kräfte auf, die zu einer Umverteilung der Strömung führen. Hierbei werden Sekundärströmungen abgeschwächt, und es wird die Strömungsqualität im Bereich des Nabenschnittes weiter verbessert.

Gemäß einer Ausführungsform ist es vorgesehen, daß die Nabenkontur im Bereich der Druckseite jeder Schaufel im Axialschnitt gesehen eine konkave Krümmung aufweist.

Vorteilhafterweise ist es bei einer solchen Ausbildung vorgesehen, daß die konkave Nabenkontur im wesentlichen über die Länge der Verdichterschaufeln reicht.

Weiterhin ist es vorteilhafterweise vorgesehen, daß die konkaven Nabenkontur am Anfang und am Ende in den Verlauf des nicht konturierten Nabenumfangs übergeht.

Gemäß einer Ausführungsform ist es vorgesehen, daß die Nabenkontur auf der Saugseite einen weniger konkaven Verlauf als die Nabenkontur auf der Druckseite, oder einen linearen, einen leicht konvexen oder einen konvex/konkaven Verlauf hat.

Vorzugsweise ist es vorgesehen, daß die konkave Nabenkontur im achsnormalen Schnitt gesehen von der Druckseite einer Schaufel zur Saugseite der benachbarten Schaufel in einem glatten Verlauf ansteigt.

Gemäß einer Weiterbildung der zuletzt genannten Ausführungsform ist es vorgesehen, daß die konkave Nabenkontur von der Druckseite einer Schaufel zur Saugseite der benachbarten Schaufel in einem im wesentlichen linearen Verlauf ansteigt.

Alternativ hierzu kann es vorgesehen sein, daß die konkave Nabenkontur von der Druckseite einer Schaufel zur Saugseite der benachbarten Schaufel in einem zunächst konkaven und dann konvexen Verlauf ansteigt.

Vorzugsweise beträgt die Neigung der konkaven Nabenkontur im Verlauf von der Druckseite einer Schaufel zur Saugseite der benachbarten Schaufel gegenüber einer Tangente an den Nabenumfang höchstens 20°, besonders vorzuziehen ist eine Neigung der konkaven Nabenkontur unter 10°, und insbesondere zwischen 2,5° und 7,5°.

Erfindungsgemäß ist es insbesondere vorgesehen, daß die konkave Nabenkontur segmentweise an einem einstückig mit der Verdichterschaufel ausgebildeten Schaufelfuß vorgesehen ist, wobei die Schaufelfüße aller Verdichterschaufeln die äußere Umfangsfläche der Nabe definieren.

Von besonderem Vorteil ist die Anwendung der Erfindung bei Gasturbinen, insbesondere bei Turbostrahltriebwerken.

Im folgenden wird ein Ausführungsbeispiel der Erfindung anhand der Zeichnung erläutert.

Es zeigen:
- Fig. 1: eine schematisierte Draufsicht auf ein Flugzeug zur Erläuterung der im Stande der Technik bekannten Flächenregel;
- Fig. 2: eine schematisierte Teilschnittansicht eines Verdichters, welche die Konturierung der Nabe des Rotors in Anlehnung an die bekannte Flächenregel zeigt;
- Fig. 3a): ein Diagramm, welches die Abhängigkeit der Mach-Zahl am Profil im Bereich der Nabe bei dem in Fig. 2 gezeigten Verdichter bei subsonischer Strömung wiedergibt;
- Fig. 3b): ein Diagramm, welches die Abhängigkeit der Mach-Zahl am Profil im Bereich der Nabe bei dem in Fig. 2 gezeigten Verdichter bei transsonischer Strömung wiedergibt;
- Fig. 4a): eine Querschnittsansicht durch mehrere Verdichterschaufeln, welche gemäß dem Ausführungsbeispiel der Erfindung im Bereich der Nabe mit einer konkaven Kontur versehen sind, entlang der Linie A-A in Fig. 4b);
- Fig. 4b): eine schematisierte Schnittansicht, welche eine Schaufel eines Verdichters gemäß dem Ausführungsbeispiel der Erfindung zeigt;
- Fig. 4c): einen Ausschnitt aus Fig. 4a), welcher die Winkelverhältnisse der Konturierung im Bereich der Nabe entsprechend Fig. 4a) zeigt; und
- Fig. 5: ein Diagramm, welche die Abhängigkeit der Mach-Zahl vom Profil der Konturierung im Bereich der Nabe für das in Fig. 4 gezeigte Ausführungsbeispiel wiedergibt.

Fig. 2 zeigt in vereinfachter schematisierter Darstellung eine Schnittansicht durch einen Teil eines Turbostrahltriebwerks, wie es etwa zum Antrieb von Hochleistungsflugzeugen verwendet wird. In der Figur dargestellt sind eine Rotorscheibe 1 und ein Stator 4 eines in einem Triebwerksgehäuse 5 angeordneten Verdichters. Der Rotor 1 enthält eine Anzahl von radial um eine Nabe 2 angeordneten, mit einem Profil versehenen Verdichterschaufeln 3. Bei der Rotation des Rotors wird aufgrund des Druckunterschieds zwischen der Druckseite und der Saugseite der Verdichterschaufeln 3 durch den Verdichter komprimierte Luft in der in Fig. 2 gezeigten Pfeilrichtung geliefert.

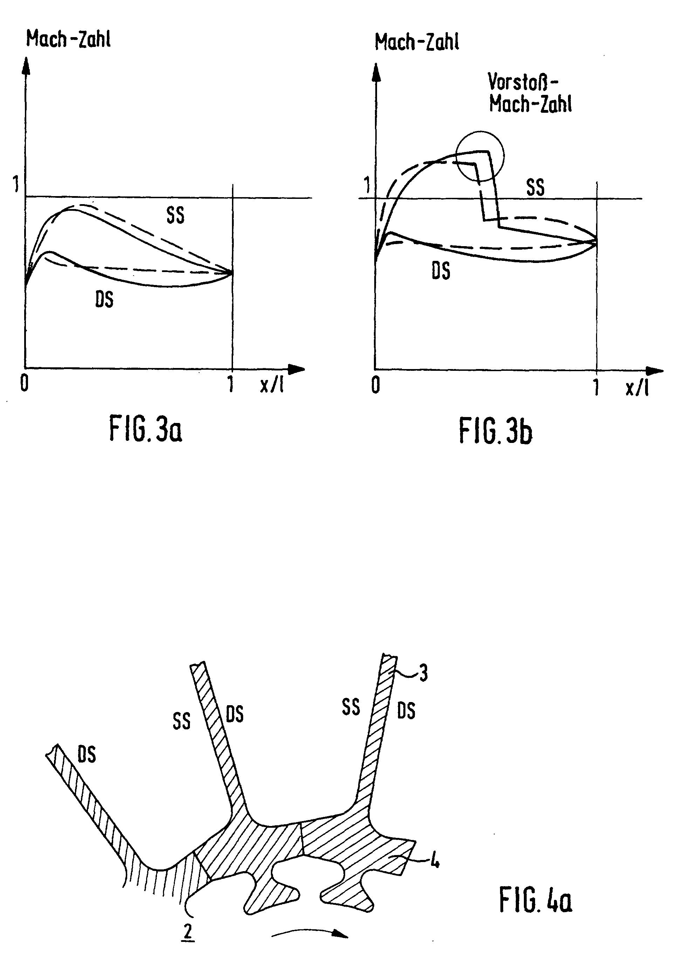

Fig. 3a) zeigt ein Diagramm, welches die Mach-Zahl-Verteilung über die in Fig. 2a) gezeigte Länge x/l der Nabe 2 zeigt. Im unteren Teil des Diagramms ist mit einer durchgezogenen dünnen Linie die Geschwindigkeitsverteilung auf der Druckseite DS und der Saugseite SS für eine mit einer umfangssymmetrischen, konkaven Konturierung versehene Nabe 2 für den Fall gezeigt, bei dem die Mach-Zahlen im Unterschallbereich liegen. Im Vergleich dazu ist mit einer gestrichelten dünnen Linie die Geschwindigkeitsverteilung für eine Nabe 2 ohne Konturierung dargestellt, wie sie in Fig. 2 durch eine gestrichelte Linie dargestellt ist. Wie aus dem Vergleich der beiden Geschwindigkeitsverteilungen zu sehen ist, ergibt sich aus der konkaven Konturierung eine Verringerung der Geschwindigkeit im Nabenbereich sowohl auf der Druckseite DS als auch auf der Saugseite SS.

In Fig. 3b) ist durch eine durchgezogene dicke Linie die Geschwindigkeitsverteilung wiederum für die mit einer konkaven, umfangssymmetrischen Konturierung K versehene Nabe 2 für die Druckseite DS und die Saugseite SS für den Fall hoher Mach-Zahlen gezeigt. Wie zu sehen ist, überschreitet für diesen transsonischen Fall die Mach-Zahl auf der Saugseite SS den Wert 1, so daß ein mit Stoßverlusten verbundener Verdichtungsstoß (schlagartiger Geschwindigkeitsabfall) auftritt. Im Vergleich dazu ist durch eine gestrichelte dicke Linie wiederum die Geschwindigkeitsverteilung für eine Nabe gezeigt, die keine derartige konkave Konturierung aufweist. Wie aus dem Vergleich ersichtlich ist, ergibt sich für die im Unterschallbereich arbeitende Druckseite DS durch die konkave Konturierung wiederum eine Absenkung der Geschwindigkeit, wenn die Nabe 2 mit der konkaven Konturierung K versehen wird, wogegen für die im transsonischen Bereich arbeitende Saugseite SS die konkave Konturierung K zu einem weiteren Geschwindigkeitsanstieg und damit zu einer Verstärkung der Stoßverluste führt. Dies ist dadurch zu erklären, daß die konkave Konturierung K für die Saugseite SS die Wirkung einer Überschalldüse hat.

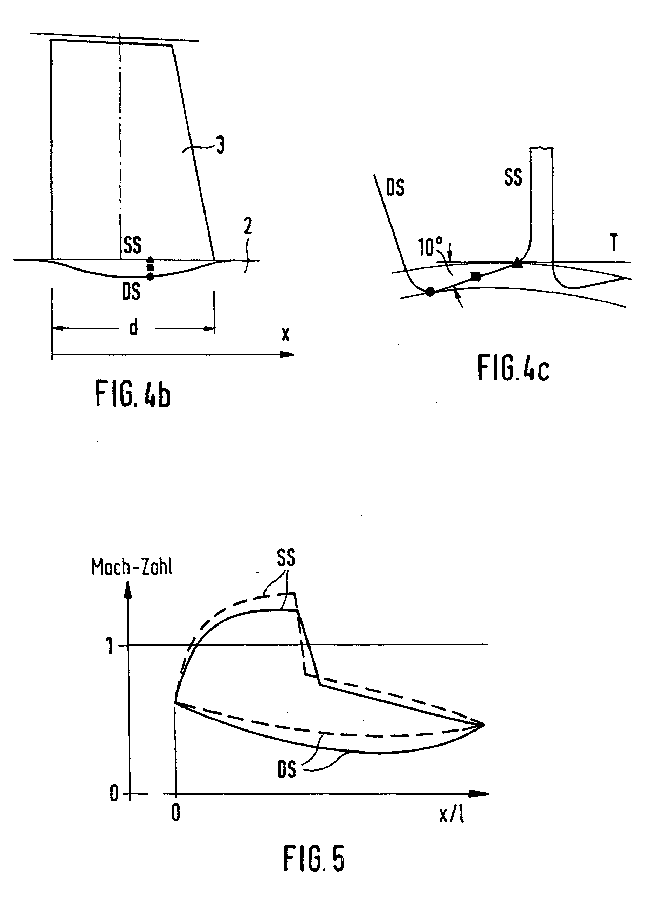

Fig. 4a) zeigt einen Radialschnitt durch eine Teil eines Verdichterrotors gemäß einem Ausführungsbeispiel der Erfindung, bei dem die Nabe 2 an jeder Schaufel 3 nur im Bereich der Druckseite DS eine konkave Kontur K aufweist, während an der gegenüberliegenden Saugseite SS jeder Verdichterschaufel 3 die Nabe 2 im wesentlichen keine konkave Konturierung aufweist. Wie aus den Fig. 4a) und 4b) zu sehen ist, weist die Nabe 2 im Bereich der Druckseite DS jeder Schaufel 3 im Axialschnitt gesehen eine Kontur mit konkaver Krümmung auf. Diese konkave Nabenkontur K reicht im wesentlichen über die Länge l der Turbinenschaufel 3 in axialer Richtung. Am Anfang und am Ende geht die konkave Nabenkontur K in den Verlauf der nicht konturierten Nabe 2 über, vergleiche Fig. 4b).

Wie aus Fig. 4a) zu sehen ist, steigt die konkave Nabenkontur K im Radialschnitt gesehen von dem Ort ihrer größten Tiefe in der Nähe der Druckseite DS einer Schaufel 3 zur Saugseite SS der benachbarten Schaufel 3 in einem glatten Verlauf an. Bei dem vorliegenden Ausführungsbeispiel ist dieser Verlauf am Grund der konkaven Nabenkontur K im wesentlichen linear.

Fig. 4c) zeigt die Winkelverhältnisse der Nabenkontur K gegenüber einer Tangente T an den Nabenumfang im Bereich der größten Tiefe der Nabenkontur K. Die mit einem ausgefüllten Kreis bezeichnete Stelle zeigt in den Fig. 4b) und 4c) den Ort der größten Tiefe der Nabenkontur K in unmittelbarer Nähe der Druckseite DS einer Schaufel 3 an. Von dort steigt die Nabenkontur K in einem im wesentlichen linearen Verlauf zur Saugseite SS der benachbarten Schaufel 3 an, wobei der Übergang der Nabenkontur K in den nicht konturierten Umfang an der Saugseite der Nabe 2 durch ein ausgefülltes Dreieck bezeichnet ist. Im Bereich der Druckseite DS und der Saugseite SS geht die Nabenkontur in einer glatten Krümmung in das Profil der Verdichterschaufeln 3 über. In der Mitte zwischen zwei benachbarten Schaufeln 3 hat die Nabenkontur, wie schon oben gesagt, einen im wesentlichen linearen Verlauf, wobei die Neigung gegenüber einer Tangente T an den Nabenumfang einen flachen Winkel aufweist und bei dem gezeigten Ausführungsbeispiel maximal 10° beträgt.

Wie aus Fig. 4a) zu sehen ist, ist der äußere Umfang der Nabe im Bereich zwischen den Verdichterschaufeln 3 segmentartig durch Füße 4 der Schaufeln 3 gebildet, welche einstückig mit diesen ausgebildet sind. Die Schaufelfüße 4 sind so ausgebildet, daß die konkave Nabenkontur K segmentweise an den Schaufelfüßen 4 ausgebildet ist.

Fig. 5 zeigt die Geschwindigkeitsverteilung der Strömung im Nabenbereich eines entsprechend den Fig. 4a) bis c) ausgebildeten Verdichterrotors. Für den Fall von Strömungsgeschwindigkeiten im transsonischen Bereich ist gegenüber dem durch eine gestrichtelte Linie dargestellten Geschwindigkeitsprofil eines Verdichters mit einer Nabe, die keine konkave Konturierung aufweist, an der Druckseite DS die Geschwindigkeit vermindert, ähnlich wie es in Fig. 3b) für den Fall einer Nabenkontur K mit umfangssymmetrischem Verlauf gezeigt ist. Anders als bei dem Geschwindigkeitsprofil in Fig. 3b) ist bei der erfindungsgemäßen Nabenkonturierung jedoch auch das Geschwindigkeitsprofil der transsonischen Strömung im Bereich der Saugseite SS herabgesetzt und gleichzeitig der Verdichtungsstoß vermindert, wie es sich aus der geringeren Höhe und des geringeren Gradienten des Verdichtungsstoßes ergibt. Durch die asymmetrische konkave Nabenkonturierung zwischen Druckseite DS und Saugseite SS zweier benachbarter Verdichterschaufeln 3 wird somit eine wesentliche Verbesserung der Strömungsdynamik im Nabenbereich und damit eine Verminderung der Stoßverluste erreicht.

Insbesondere bei im transsonischen Bereich arbeitenden Turbostrahltriebwerken ist somit eine höhere Leistung erreichbar.

## Patentansprüche

1. Turbomaschine mit einer im transsonischen Bereich arbeitenden Verdichterstufe, die einen aus einer Nabe (2) und einer Anzahl von sich radial nach außen von der Nabe (2) wegerstreckenden Verdichterschaufeln (3) bestehenden Rotor (1) und einen aus einem Gehäuse und einer Anzahl von sich radial nach innen vom Gehäuse weg erstreckenden Verdichterschaufeln bestehenden Stator (4) umfasst, wobei der Stator (4) eine mit seinen Schaufeln verbundene, statische Nabe aufweisen kann, und wobei die Nabe (2) des Rotors (1) und/oder die Nabe des Stators (4) und ggf. das Gehäuse des Stators (4) an jeder Schaufel (3) im Bereich deren Druckseite (DS) eine konkave Kontur (K) aufweist, **dadurch gekennzeichnet, dass** die Nabenkontur auf der Saugseite (SS) jeder Verdichterschaufel (3) mit druckseitig konkaver Nabenkontur einen weniger konkaven Verlauf, einen linearen, einen leicht konvexen oder einen konvex/konkaven Verlauf aufweist.

2. Turbomaschine nach Anspruch 1, **dadurch gekennzeichnet, dass** die konkave Nabenkontur (K) am Anfang und am Ende in den Verlauf des nicht konturierten Nabenumfangs übergeht.

3. Turbomaschine nach Anspruch 1oder 2, **dadurch gekennzeichnet, dass** die konkave Nabenkontur (K) im achsnormalen Schnitt gesehen von der Druckseite (DS) einer Schaufel (3) zur Saugseite (SS) der benachbarten Schaufel (3) in einem glatten Verlauf ansteigt.

4. Turbomaschine nach Anspruch 3, **dadurch gekennzeichnet, dass** die konkave Nabenkontur (K) von der Druckseite (DS) einer Schaufel (3) zur Saugseite (SS) der benachbarten Schaufel (3) in einem im wesentlichen linearen Verlauf ansteigt.

5. Turbomaschine nach Anspruch 3, **dadurch gekennzeichnet, daß** die konkave Nabenkontur (K) im Verlauf von der Druckseite (DS) einer Schaufel (3) zur Saugseite (SS) der benachbarten Schaufel (3) in einem zunächst konkaven und dann konvexen Verlauf ansteigt.

6. Turbomaschine nach einem der Ansprüche 3 bis 5, **dadurch gekennzeichnet, daß** die Neigung der konkaven Nabenkontur (K) im Verlauf von der Druckseite (DS) einer Schaufel (3) zur Saugseite (SS) der benachbarten Schaufel (3) gegenüber einer Tangente (T) an den Nabenumfang höchstens 20° beträgt.

7. Turbomaschine nach Anspruch 6, **dadurch gekennzeichnet, daß** die Neigung der konkaven Nabenkontur (K) weniger als 10°, vorzugsweise zwischen 2,5° und 7,5° beträgt.

8. Turbomaschine nach einem der Ansprüche 1 bis 7, **dadurch gekennzeichnet, daß** die konkave Nabenkontur (K) segmentweise an einem einstückig mit der Turbinenschaufel (3) ausgebildeten Schaufelfuß (4) vorgesehen ist, wobei die Schaufelfüße (4) aller Verdichterschaufeln (3) die äußere Umfangsfläche der Nabe im Bereich der Schaufeln (3) definieren.

9. Turbomaschine nach einem der Ansprüche 1 bis 8, **dadurch gekennzeichnet, daß** es sich um eine Gasturbine, vorzugsweise um ein Turbostrahltriebwerk handelt.

## Claims

1. Turbine engine with a compressor stage operating in the trans-sonic range, comprising a rotor (1) consisting of a hub (2) and a number of compressor blades (3) extending radially out from the hub (2) and a stator (4) consisting of a housing and a number of compressor blades extending radially towards the interior away from the housing, in which the stator (4) may have a static hub joined to its blades and in which the hub (2) of the rotor (1) and/or the hub of the stator (4) and optionally the housing of the stator (4) has a concave contour (K) on every blade (3) in the region of the pressure side (DS) thereof, **characterised in that** the hub contour on the suction side (SS) of every compressor blade (3) with a pressure-side concave hub contour has a less concave profile, a linear profile, a slightly convex or a convex/concave profile.

2. Turbine engine as claimed in claim 1, **characterised in that**, at the start and at the end, the concave hub contour (K) merges with the profile of the non-contoured hub periphery.

3. Turbine engine as claimed in claim 1 or 2, **characterised in that** the concave hub contour (K) as viewed in section perpendicular to the axis, rises in a smooth profile from the pressure side (DS) of one blade (3) to the suction side (SS) of the adjacent blade (3).

4. Turbine engine as claimed in claim 3, **characterised in that** the concave hub contour (K) rises in a substantially linear profile from the pressure side (DS) of one blade (3) to the suction side (SS) of the adjacent blade (3).

5. Turbine engine as claimed in claim 3, **characterised in that**, in the profile from the pressure side (DS) of one blade (3) to the suction side (SS) of the adjacent blade (3), the concave hub contour (K) rises initially in a concave and then in a convex profile.

6. Turbine engine as claimed in one of claims 3 to 5, **characterised in that** the angle of the concave hub contour (K) in the profile from the pressure side (DS) of one blade (3) to the suction side (SS) of the adjacent blade (3) to a tangent (T) on the hub circumference is at most 20°.

7. Turbine engine as claimed in claim 6, **characterised in that** the angle of the concave hub contour (K) is less than 10°, preferably between 2.5° and 7.5°.

8. Turbine engine as claimed in one of claims 1 to 7, **characterised in that** the concave hub contour (K) is provided in segments on a blade foot (4) of a design integral with the turbine blade (3), the blade feet (4) of all compressor blades (3) defining the external circumferential surface of the hub in the region of the blades (3).

9. Turbine engine as claimed in one of claims 1 to 8, **characterised in that** it is a gas turbine, preferably a turbojet.

## Revendications

1. Turbomachine comportant un étage de compression travaillant dans le domaine transsonique, qui comporte un rotor (1) constitué par un moyeu (2) et un nombre d'aubes de compresseur (3) qui s'étendent radialement vers l'extérieur à partir du moyeu (2), et un stator (4) constitué par un carter et un nombre d'aubes de compresseur, qui s'étendent radialement vers l'intérieur à partir du carter, le stator (4) pouvant posséder un moyeu statique relié à ses aubes, et le moyeu (2) du rotor (1) et/ou le moyeu du stator (4) et éventuellement le carter du stator (4) comportant un profil concave (K) au niveau de chaque aube (3) dans la zone de son côté refoulement (DS), **caractérisée en ce que** sur le côté aspiration (SS) de chaque aube (3) du compresseur possédant un profil de moyeu concave sur le côté refoulement, le profil de moyeu possède une configuration moins concave, une configuration linéaire, une configuration légèrement convexe ou une configuration convexe/concave.

2. Turbomachine selon la revendication 1, **caractérisée en ce que** le profil concave (K) du moyeu se prolonge, au niveau du début et de l'extrémité, par la configuration de la périphérie non profilée du moyeu.

3. Turbomachine selon la revendication 1 ou 2, **caractérisée en ce que**, vu en coupe perpendiculaire à l'axe, le profil concave (K) du moyeu remonte depuis le côté refoulement (DS) d'une aube(3)en direction du côté aspiration (SS) de l'aube voisine (3) avec une configuration lisse.

4. Turbomachine selon la revendication 3, **caractérisée en ce que** le profil concave (R) du moyeu remonte du côté refoulement (DS) d'une aube(3)en direction du côté aspiration (SS) de l'aube voisine (3) avec une configuration essentiellement linéaire.

5. Turbomachine selon la revendication 3, **caractérisé en ce que** le profil concave (K) du moyeu remonte depuis le côté refoulement (DS) d'une aube (3) en direction du côté aspiration (SS) de l'aube voisine (3) selon une configuration tout d'abord concave, puis convexe.

6. Turbomachine selon l'une des revendications 3 à 5, **caractérisée en ce que** l'inclinaison du profil concave (K) du moyeu dans sa configuration passant du côté refoulement (DS) d'une aube (3) au côté aspiration (SS) de l'aube voisine (3) par rapport à une tangente (T) à la circonférence du moyeu est au maximum de 20°.

7. Turbomachine selon la revendication 6, **caractérisée en ce que** l'inclinaison du profil concave du moyeu (K) est inférieure à 10° et est comprise de préférence entre 2,5° et 7,5°.

8. Turbomachine selon l'une des revendications 1 à 7, **caractérisée en ce que** le profil concave (K) du moyeu est prévu sous la forme d'un segment sur un pied d'aube (4) formé d'un seul tenant avec l'aube de turbine (3), les pieds (4) de toutes les aubes (3) de compresseur définissant la surface périphérique extérieure du moyeu dans la zone des aubes (3).

9. Turbomachine selon l'une des revendications 1 à 8, **caractérisée en ce qu'**il s'agit d'une turbine à gaz, de préférence d'un moteur à turbine.
